Europäisches Patentamt

European Patent Office

Office européen des brevets

(11) Veröffentlichungsnummer: **0 212 261**
**B1**

(12) **EUROPÄISCHE PATENTSCHRIFT**

(45) Veröffentlichungstag der Patentschrift:
31.01.90

(21) Anmeldenummer: **86109797.0**

(22) Anmeldetag: **17.07.86**

(51) Int. Cl.⁴: **H 04 Q 11/04,** H 04 N 7/13, H 04 H 1/00

(54) **Breitband-Verteil-Kommunikationssystem.**

(30) Priorität: **20.08.85 DE 3529666**

(43) Veröffentlichungstag der Anmeldung:
**04.03.87 Patentblatt 87/10**

(45) Bekanntmachung des Hinweises auf die Patenterteilung:
**31.01.90 Patentblatt 90/5**

(84) Benannte Vertragsstaaten:
**AT CH DE FR IT LI NL SE**

(56) Entgegenhaltungen:
**EP-A- 0 058 417**
**EP-A- 0 120 806**
**EP-A- 0 144 075**
**EP-A- 0 144 077**
**DE-A- 3 242 580**
**GB-A- 2 038 147**

(73) Patentinhaber: **ANT Nachrichtentechnik GmbH,**
**Gerberstrasse 33, D-7150 Backnang (DE)**

(72) Erfinder: **Hofmeister, Hagen, Dipl.-Ing. (FH), Neustädter**
**Strasse 34, D-7054 Korb (DE)**

## Beschreibung

Die Erfindung betrifft ein Breitband-Verteil-Kommunikationssystem nach dem Oberbegriff des Patentanspruches 1. Ein solches System ist in der Zeitschrift «Unterrichtsblätter der Deutschen Bundespost» Ausg. B, Fernmeldewesen, Jg. 35/1982, Nr. 3, Seiten 139 bis 164 beschrieben.

Im Abschnitt 4.1 des oben genannten Aufsatzes ist beschrieben, daß einer Zentrale (Rundfunkempfangsstelle) als Breitbandsignale die Fernsehprogramme der Rundfunkanstalten und der örtlichen Programmanbieter zugeleitet werden. Als Quellen dieser Fernsehprogramme bzw. Breitbandsignale sind also die Studios der Rundfunkanstalten und der örtlichen Programmanbieter anzusehen.

Die Fernsehprogramme werden der Zentrale (Rundfunkempfangsstelle) in der gleichen Signalform zugeleitet, in der sie auch zum unmittelbaren drahtlosen Empfang durch Teilnehmer ausgestrahlt werden. Hierbei werden bei Farbfernsehprogrammen aus Kompatibilitätsgründen mit Schwarz-Weiß-Fernsehprogrammen bandbreitenvermindernde Modulationsverfahren, wie z.B. NTSC, PAL, SECAM angewendet. Solche bandbreitenvermindernde Modulationsverfahren sind immer mit Qualitätseinbußen verbunden.

Diese Breitbandsignale werden in der Zentrale nach der analogen Multiplextechnik zu einem Multiplexsignal aufbereitet und über ein Verteilnetz den Teilnehmern zugeleitet, wobei aus bandbreitenökonomischen Gründen die zuvor erwähnten bandbreitenvermindernden Modulationsverfahren beibehalten werden. Als Teilnehmer werden die Einrichtungen einer Wohnung angesehen. In ihr befinden sich ein oder mehrere Fernsehempfänger als Wiedergabegeräte für die Breitbandsignale.

Wie in den Tabellen 1 bis 3 der o.g. Unterrichtsblätter angegeben ist, werden an das Verteilnetz des bekannten Systems sehr hohe und eng tolerierte übertragungstechnische Forderungen gestellt, was einen hohen Aufwand für Kabel, Verstärker, Umsetzer usw. zur Folge hat. Die in einem solchen System verwendeten Kabel sind in dem von der Anmelderin herausgegebenen Prospekt «Empfangs- und Übertragungseinrichtungen für moderne Breitband-Kommunikationsanlagen», Bestell-Nr. ANT 1445 a 07.83, ausführlich beschrieben. Gemäß Seite 18 werden in den höheren Netzebenen Koaxial-Kabel mit einem massiven kupfernen Innenleiter mit bis zu 4,9 mm Durchmesser verwendet. Der ebenfalls kupferne Außenleiter weist bis zu 20 mm Außendurchmesser auf. Dies hat einen großen Aufwand an teuren Werkstoffen zur Folge.

Das bekannte System weist nur eine einzige Zentrale (Rundfunkempfangsstelle) auf und ist deshalb nur für die Versorgung eines verhältnismäßig kleinen Gebietes, z.B. einer Stadt, geeignet. Eine landesweite Versorgung läßt sich durch mehrfache Anwendung des bekannten Systems erreichen, indem man das Land in genügend kleine Gebiete unterteilt und in jedem Gebiet ein eigenes System mit einer eigenen Zentrale einrichtet. Jedoch vervielfacht sich damit auch der schon wegen der hohen übertragungstechnischen Forderungen hohe Aufwand für die Umsetzer zur Bildung des analogen Multiplexsignals.

Der Erfindung liegt die Aufgabe zugrunde, ein Breitband-Verteil-Kommunikationssystem anzugeben, welches folgenden Bedingungen genügt:

a) Geringere übertragungstechnische Forderungen an die Geräte ohne Qualitäteinbuße des wiedergegebenen Fernsehbildes,

b) geringere Kabelkosten,

c) landesweite Versorgung.

Diese Aufgabe wird durch die kennzeichnenden Merkmale des Patentanspruches 1 gelöst.

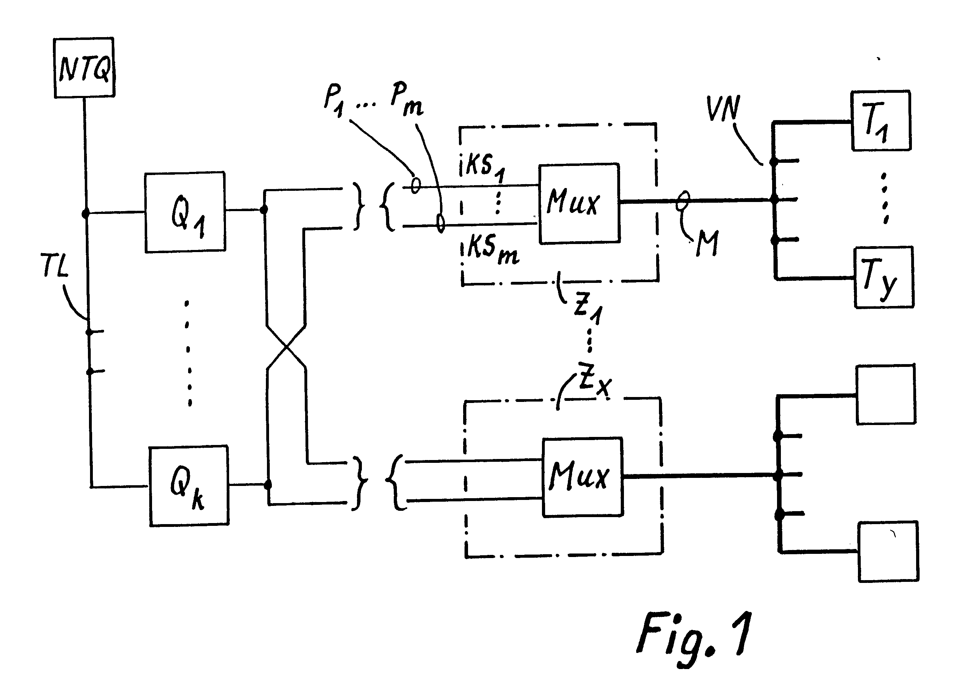

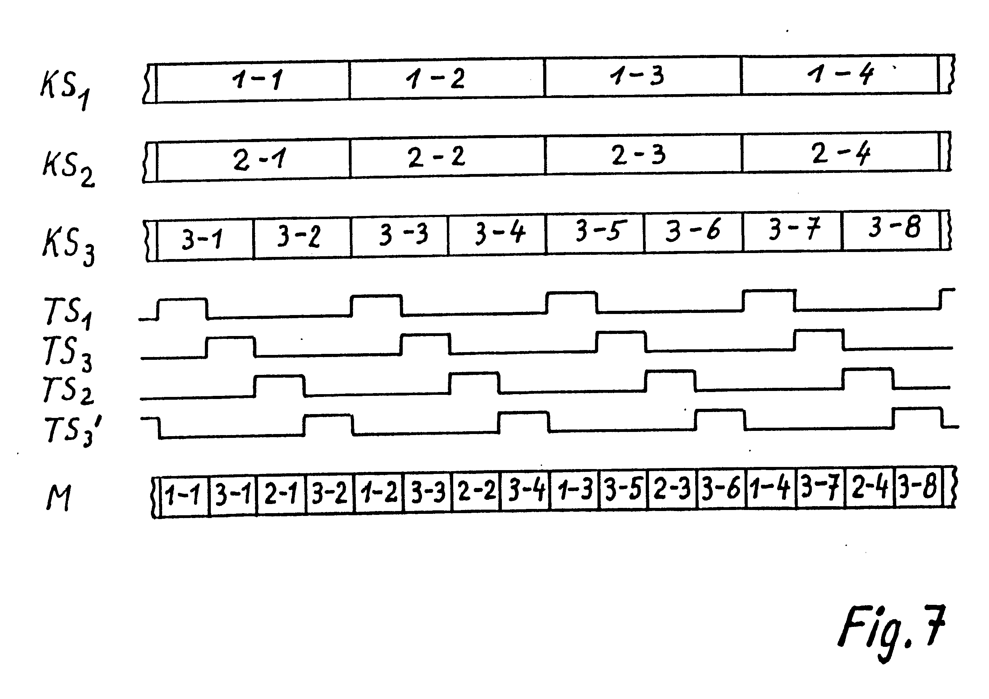

Die Erfindung wird anhand von in den Figuren 1 bis 9 dargestellten Ausführungsbeispielen erläutert, wobei die Figuren 1 bis 6 ein Beispiel gemäß dem Patentanspruch 2 betreffen. Die Figuren 7 bis 9 betreffen ein Ausführungsbeispiel nach dem Patentanspruch 3. Da jeder der Ansprüche 2 und 3 auf den Anspruch 1 zurückbezogen ist, kann jedes dieser Beispiele auch zur Erläuterung eines Systems nach dem Anspruch 1 dienen.

Es wird zunächst das Ausführungsbeispiel für den Patentanspruch 2 nach den Figuren 1 bis 6 beschrieben. Die Figur 1 gibt eine Übersicht über das erfindungsgemäße Breitband-Verteil-Kommunikationssystem, die Figuren 2 bis 4 geben Einzelheiten desselben wieder. Anhand der Figuren 5 und 6 wird die Funktion einzelner Baugruppen verdeutlicht.

Es bedeuten in der Figur 1:

| | |
|---|---|
| $Q_1...Q_k$: | k Quellen für Breitbandsignale |
| TL: | eine Taktleitung |
| NTQ: | eine Normtaktquelle |
| $P_1...P_m$ | m Fernsehprogramme als Breitbandsignale |
| $Z_1...Z_x$ | x Zentralen |
| Mux: | ein Multiplexer |
| $KS_1...KS_m$: | m Eingänge des Multiplexers |
| VN: | ein Verteilnetz |
| $T_1...T_y$ | y Teilnehmer |

In den Quellen $Q_1$ bis $Q_K$ werden die dort produzierten oder von außerhalb zugeführten Fernsehprogramme zu digitalen Breitbandsignalen $P_1$ bis $P_m$ mit einheitlicher Bitrate und einheitlichem Rahmenaufbau aufbereitet. Jeder Rahmen weist neben den Bits zur Übertragung des FBAS-Signals (Farbbild-Austast-Synchronsignal) und des zugehörigen Tones weitere Bits auf für eine bei allen digitalen Breitbandsignalen einheitliche Rahmenkennung sowie für eine für jedes der Fernsehprogramme $P_1$ bis $P_m$ individuelle Kanalkennung. Diese liegt, bezogen auf die Rahmenkennung, immer am gleichen Platz.

Im Extremfall ist für jedes der Breitbandsignale eine eigene Quelle vorgesehen. Als Quellen kann man die Studios der Rundfunkanstalten und die der lokalen Programmanbieter ansehen.

Die Aufbereitung auf gleiche Bitrate ist besonders einfach möglich, wenn eine für alle Quellen gemeinsame Normtaktquelle NTQ vorgesehen ist. Der in ihr erzeugte Normtakt wird über die Taktleitung TL an alle Quellen $Q_1$ bis $Q_k$ übertragen, wo durch Vervielfachen und/oder Teilen und/oder Synchronisieren örtlicher Taktgeneratoren die zum Aufbereiten auf einheitliche Bitrate notwendigen synchronen Takte erzeugt werden.

Die Fernsehprogramme bzw. digitalen Breitband-signale $P_1$ bis $P_m$ werden den Eingängen $KS_1$ bis $KS_m$ der Multiplexer Mux in den Zentralen $Z_1$ bis $Z_x$ zugeleitet, wobei für jedes Fernsehprogramm ein eigener physikalischer Leiter oder auch Multiplexausnutzung von wenigen Leitern vorgesehen sein kann.

An jede Zentrale sind über ein Verteilnetz VN viele Teilnehmer angeschlossen. Die Teilnehmer der Zentrale $Z_1$ sind mit $T_1$ bis $T_y$ bezeichnet. Im Multiplexer M werden die digitalen Breitbandsignale $P_1$ bis $P_m$ zu einem Multiplexsignal M zusammengefaßt, welches über das Verteilnetz VN an alle Teilnehmer $T_1$ bis $T_y$ übertragen wird.

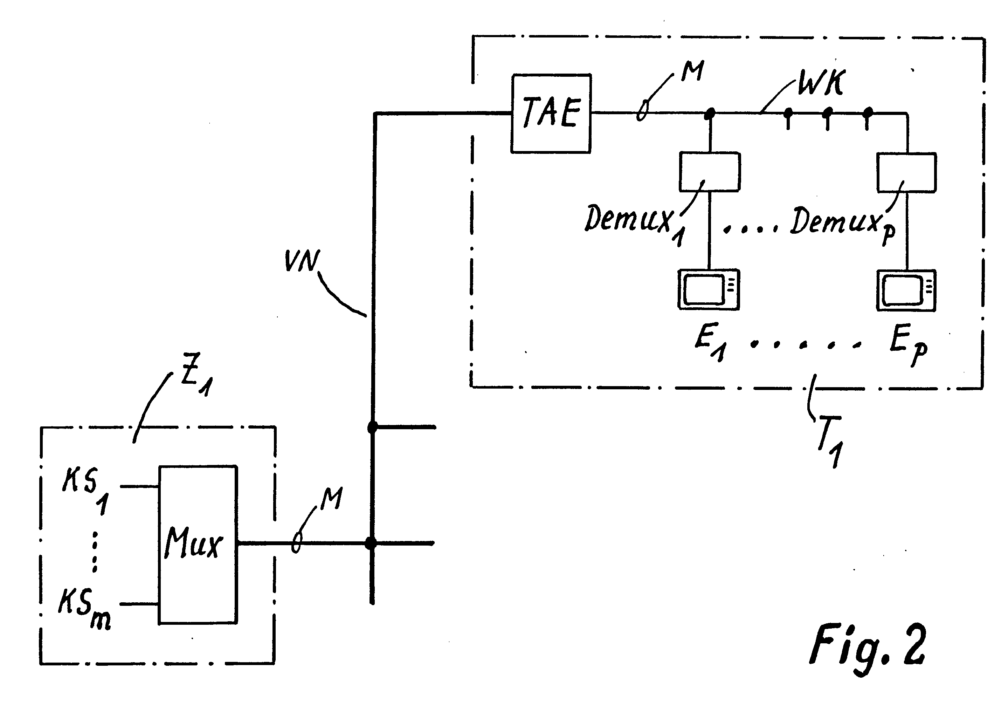

Weitere Einzelheiten werden anhand der Figur 2 erläutert. In ihr ist links unten die Zentrale $Z_1$ mit dem Multiplexer Mux und seinen Eingängen $KS_1$ bis $KS_m$ dargestellt. Ferner ist einer der Teilnehmer, nämlich der Teilnehmer $T_1$, ausführlich dargestellt. Als Teilnehmer werden hier die Einrichtungen in einer Wohnung verstanden. Diese bestehen aus einer Teilnehmerschalteeinheit TAE, einer Wohnungsverkabelung WK, den Demultiplexern $Demux_1$ bis $Demux_p$ und den Fernsehempfängern $E_1$ bis $E_p$.

In der Teilnehmeranschalteeinheit TAE wird das über das Verteilnetz VN übertragene digitale Multiplexsignal M in eine zur Übertragung über die Wohnungsverkabelung WK geeignete Form umgesetzt. An ihr sind die Fernsehempfänger $E_1$ bis $E_p$ über die ihnen zugeordnete Demultiplexer $Demux_1$ bis $Demux_p$ angeschlossen. In jedem dieser Demultiplexer wird aus dem Multiplexsignal M dasjenige Breitbandsignal gewonnen, welches dem an dem betr. Fernsehempfänger gewünschten Programm entspricht.

Die Wohnungsverkabelung Wk kann verschieden ausgeführt sein:

a) sammelschienenförmig, wie in der Figur 2 dargestellt,
b) sternförmig
c) in einer Mischform aus a) und b).

Die Demultiplexer $Demux_1$ bis $Demux_p$ befinden sich in der Nähe der betr. Fernsehempfänger, z.B. in einer Anschlußdose. Bei sternförmiger Wohnungsverkabelung können die Demultiplexer auch in der Teilnehmeranschalteeinheit TAE untergebracht sein, dies gilt auch für die Mischform nach c). Bei der Form nach a) und c) können von der Teilnehmeranschalteeinheit TAE mehrere Sammelschienen ausgehen. Welche Verkabelungsform gewählt wird, richtet sich bei gegebenem Wohnungsgrundriß nach wirtschaftlichen Gesichtspunkten, insbesondere, um kurze Kabellängen zu erreichen. Zwecks leichter Montage und geringer Lagerhaltung sind die Teilnehmeranschalteeinheiten so ausgestaltet, daß sie leicht an jede der möglichen Form der Wohnungsverkabelung angepaßt werden können.

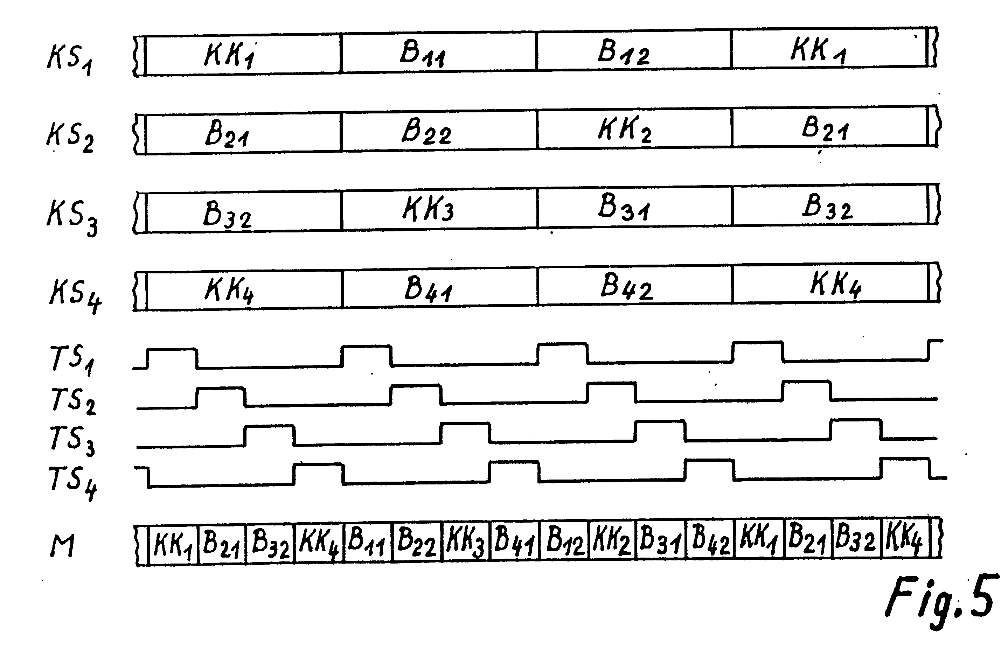

Um das Wiedergewinnen des jeweils gewünschten Breitbandkanals in einem der Demultiplexer erläutern zu können, muß zuvor die Multiplexbildung im zentralenseitigen Multiplexer erklärt werden. Dies geschieht anhand der Figur 5. Zwecks einfacherer Darstellung wird angenommen, daß der Multiplexer nur vier Eingänge, nämlich die Eingänge $KS_1$ bis $KS_4$ aufweist, d.h. die Zahl m ist hier zu 4 angenommen und das beispielhafte System ist für vier Fernsehprogramme bemessen. Jedoch kann das erfindungsgemäße System auch für m = 12, also für 12 Fernsehprogramme wie das bekannte System oder für eine noch größere Zahl bemessen werden.

In der Figur 5 sind in den Zeilen $KS_1$ bis $KS_4$ Ausschnitte von je 4 Bits der an den gleichnamigen Eingängen des Multiplexers Mux anliegenden bitratengleichen und bitflankensynchronen Breitbandsignale gezeichnet. Sie gelangen von den Quellen $Q_1$ bis $Q_k$ als geschlossene Informationsblöcke bis hierher, d.h., in demjenigen Rahmenaufbau, wie sie in den Quellen $Q_1$ bis $Q_k$ aufbereitet werden, also mit Rahmen- und Kanalkennung sowie FBAS-Signal und Fersehton ohne jede weiteren Zusätze.

Mit KK... sind die die Kanalkennung und mit B... die das FBAS-Signal bzw. den Fernsehton tragenden Bits bezeichnet. Indizes geben die Zugehörigkeit zu den einzelnen Kanälen und bei den mit B bezeichneten Bits auch noch ihre Reihenfolge untereinander an. Auf die Darstellung von Rahmenkennungsbits wurde verzichtet. Die Phasenlage von signifikanten Bits (Rahmenkennungs- und Kanalkennungsbits) eines Breitbandsignals zu denjenigen jedes anderen Breitbandsignals ist beliebig.

Im Multiplexer Mux werden diese vier Breitbandsignale bitweise verschachtelt ohne daß eine Überrahmenkennung hinzugefügt wird. Das so gewonnene und mit M bezeichnete Multiplexsignal weist also genau die vierfache Bitrate der einzelnen Breitbandsignale auf. Ein solcher Multiplexer ist im Prinzip aus mehreren, von untereinander phasenverschobenen und gegenüber den zu verschachtelnden Signalen flankensynchronen Takten durchlässig gesteuerten Torschaltungen aufgebaut. Da hier vier Breitbandsignale vorliegen, sind dementsprechend vier Takte $TS_1$ bis $TS_4$ vorgesehen, wobei durch die Indizes ihre Zuordnung zu den Breitbandsignalen $KS_1$ bis $KS_4$ angegeben ist. Die einzelnen Bits im Multiplexsignal M sind gleichlautend mit denen der einzelnen Breitbandsignale bezeichnet. So ist zu erkennen, in welcher Reihenfolge, durch die positiven Impulse der Takte gesteuert, die einzelnen Bits der Breitbandsignale zu dem Multiplexsignal zusammengefügt werden.

Die vier Takte $TS_1$ bis $TS_4$ werden in nicht dargestellter Weise aus den an den Eingängen $KS_1$ bis $KS_4$ anliegenden Breitbandsignalen gewonnen, wodurch der geforderte Bitflankensynchronismus leicht herstellbar ist. Die vier Takte müssen untereinander die in der Fig. 5 angegebene Phasenlage aufweisen, eine bestimmte Phasenlage gegenüber signifikanten Bits der Breitbandsignale wird nicht gefordert.

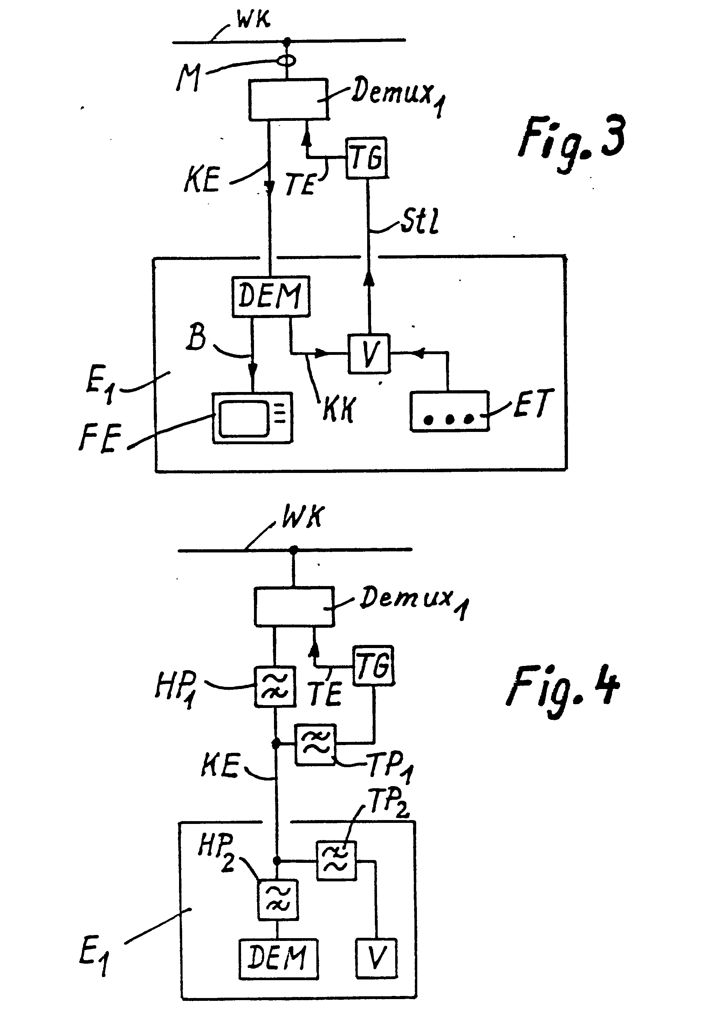

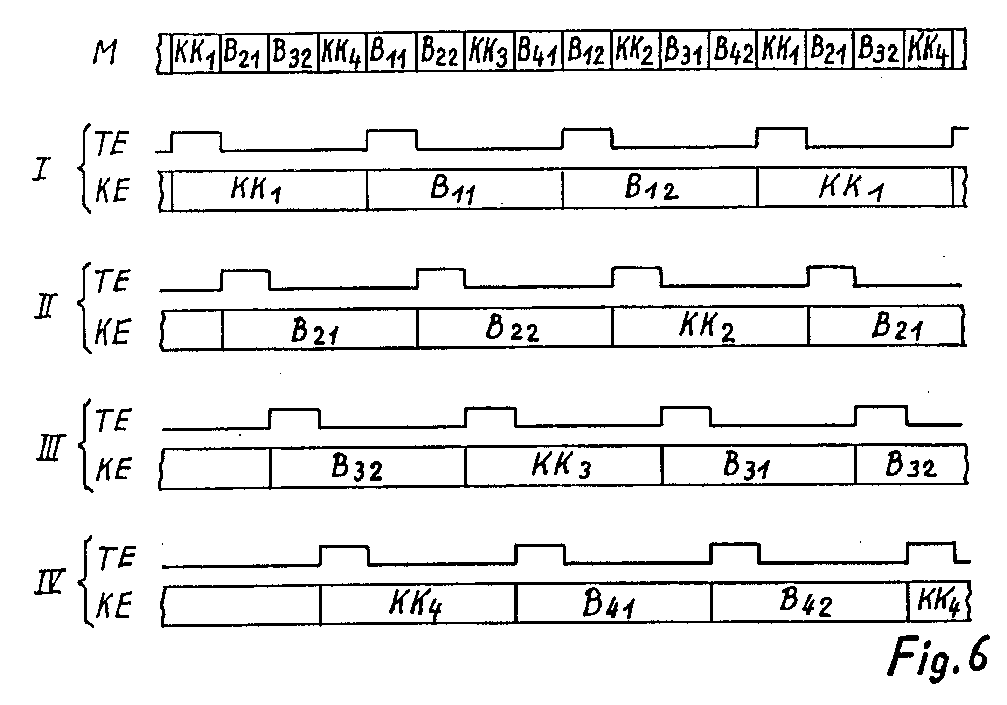

Wie teilnehmerseitig aus diesem Multiplexsignal M das dem gewünschten Fernsehprogramm entsprechende Breitbandsignal gewonnen wird, sei anhand der Figuren 3 und 6 beschrieben.

In der Figur 3 ist einer der Demultiplexer, hier $Demux_1$, gezeichnet. Er enthält einen hier separat gezeichneten Taktgenerator TG, welcher einen zum Multiplexsignal M bitflankensynchronen Empfangstakt TE aus diesem Multiplexsignal erzeugt. Auch ein Demultiplexer ist im Prinzip aus von Takten gesteuerten Torschaltungen aufgebaut. Da hier nur eines der Breitbandsignale gewonnen werden soll, genügt eine Torschaltung und ein Empfangstakt TE.

In der Figur 6 ist zunächst wieder das gemäß der Figur 5 gewonnene Multiplexsignal M dargestellt. Zu diesem kann der Empfangstakt TE zunächst jede beliebige Phasenlage aufweisen. Da zentralenseitig vier Takte mit vier verschiedenen Phasenlagen vorhanden sind, sind auch teilnehmerseitig vier verschiedene Phasenlagen interessant. Diese sind in der Figur 6 unter I bis IV mit TE bezeichnet. Mit KE sind die bei der jeweiligen Phasenlage des Empfangstaktes TE am Ausgang des Demultiplexers für die Leitung KE erscheinenden Bitfolgen bezeichnet. Durch gleichlautende Bezeichnung der einzelnen Bits und Vergleich mit der Figur 5 erkennt man, daß je nach der Phasenlage des Empfangstaktes TE eines der an den Eingängen $KS_1$ bis $KS_4$ des Multiplexers Mux anliegenden Breitbandsignale erscheint.

Das jeweils so gewonnene Breitbandsignal wird über die Leitung KE dem Demodulator DEM zugeleitet. Da auch vom Multiplexer Mux bis zum Ausgang des Demultiplexers $Demux_1$ keinerlei Bit hinzugefügt oder weggelassen wurde, reicht die Übertragung der Breitbandsignale als geschlossene Informationsblöcke von der jeweiligen Quelle $Q_1$ bis $Q_k$ bis zum Eingang des Demodulators DEM, welcher daraus durch Auswerten der Rahmenkennung die Kanalkennung KK extrahiert und das FBAS-Signal B sowie den Fernsehton dem eigentlichen Fernsehgerät FE zuleitet. Die so empfangene Kanalkennung KK und eine an einer Eingabetastatur ET eingegebene Kennung eines der aus den angebotenen Fernsehprogrammen $P_1$ bis $P_m$ (siehe Figur 1) ausgewählten Fernsehprogrammes werden einem Vergleicher V zugeführt. Bei zufälliger Übereinstimmung geschieht weiter nichts. Bei Nichtübereinstimmung gibt der Vergleicher V über die Steuerleitung Stl ein Steuersignal an den Taktgenerator TG, welcher dadurch um die Dauer einer Bitlänge des Multiplexsignals M angehalten wird. So wird erreicht, daß der Empfangstakt TE die nächste der möglichen Phasenlagen bezüglich des Multiplexsignals M annimmt und das entsprechende gewonnene Breitbandsignal zum Demodulator DEM gelangt. Dieses Anhalten geschieht so oft bis Übereinstimmung zwischen der empfangenen und der eingegebenen Kanalkennung erreicht ist.

Anhand der Figur 4 wird beschrieben, wie die lt. Figur 3 vorgesehene Steuerleitung Stl zwischen dem Vergleicher V und dem Taktgenerator TG eingespart werden kann, indem die Leitung KE zusätzlich zur Übertragung des Steuersignals vom Vergleicher V zum Taktgenerator TG benutzt wird. Dies geschieht, indem als Steuersignal ein Wechselstromimpuls mit einer Frequenz unterhalb der niedrigsten Frequenz des Breitbandsignals oder ein Gleichstromimpuls gewählt wird und beide Signale durch die Hochpässe $HP_1$ und $HP_2$ sowie die Tiefpässe $TP_1$ und $TP_2$ zusammengefaßt bzw. wieder getrennt werden.

Der Demodulator DEM, der Vergleicher V und die Eingabetastatur ET befinden sich im eigentlichen Fernsehgerät FE oder in dessen Nähe, was durch die gemeinsame Umrahmung angedeutet wird. Durch die Bezeichnung dieses Blockes mit $E_1$ wird verdeutlicht, daß er dem in der Figur 2 dargestellten Fernsehempfänger $E_1$ entspricht.

Das erfindungsgemäße System zeichnet sich durch eine einfache Taktversorgung aus. Nur die wenigen Quellen für die Fernsehprogramme müssen mit untereinander synchronen Takten versorgt werden, was die in der Figur 1 mit TL bezeichnete Taktleitung erfordert. Die Takte brauchen untereinander nur synchron zu sein, eine bestimmte Phasenlage zueinander wird nicht gefordert, weil bei den an den Eingängen der Multiplexer in den Zentralen anliegenden Breitbandsignalen auch keine bestimmte Phasenlage untereinander gefordert wird. So bestehen auch keine Forderungen hinsichtlich Laufzeiten auf den Taktleitungen.

Da die in den in größerer Zahl vorhandenen Zentralen $Z_1$ bis $Z_x$ und in den sehr vielen Demultiplexern vorgesehenen Taktgeneratoren nicht in einer bestimmten Phasenlage untereinander und in Beziehung zu signifikanten Bits der Breitbandsignale laufen müssen, sind Synchronsisierleitungen zu diesen Taktgeneratoren hin entbehrlich. Sie können vielmehr in einfacher Weise auf die jeweils vorhandenen Breitbandsignale synchronisiert werden. Durch die erfindungsgemäße digitale Aufbereitung in den Quellen und die erfindungsgemäße Bildung des Multiplexsignals in den Zentralen ist der Aufwand in den Zentralen nur gering und die Notwendigkeit mehrerer Zentralen bei landesweiter Versorgung kein Nachteil.

Das erfindungsgemäße System hat noch den Vorteil, daß wegen der Anwendung digitaler Breitbandsignale sowohl zwischen den Quellen und Zentralen als auch im Verteilnetz Glasfaserkabel eingesetzt werden können, wodurch eine wesentliche Verringerung der Kabelkosten im Verteilnetz erreicht wird. Für die Übertragung zwischen den Quellen und den Zentralen ergibt sich so bei nur geringen Kabelkosten gegenüber dem bekannten System mit drahtloser Übertragung der Vorteil einer von atmospärischen Störungen unbeeinflußten Übertragung.

Die Verwendbarkeit von Glasfasern hat den Vorteil, daß für andere Dienste ausgelegte Kabel mitbenutzt werden können.

Die Anwendung digitaler Breitbandsignale hat ferner den Vorteil, daß von den bandbreitenvermindernden, jedoch auch qualitätsmindernden Modulationsverfahren kein Gebrauch gemacht werden muß.

Eine eigene Normtaktquelle kann entfallen, wenn ein schon vorhandenes, für die Versorgung anderer digitaler Fernmeldesysteme vorgesehenes Netz zur Verteilung eines Normtaktes mitbenutzt wird. Wie im Taschenbuch der Fernmeldepraxis 1984, Fachverlag Schiele und Schön, Berlin, auf den Seiten 70 bis 104 in dem Aufsatz «Synchronisierung des digitalen Fernmeldenetzes der DBP» beschrieben ist, haben die Post- und Fernmeldeverwaltungen solche Nezte aufgebaut, wobei die Deutsche Bundespost sich für einen Normtakt von 2048 kHz entschlossen hat.

Einfache Taktgeneratoren in den Quellen $Q_1$ bis $Q_k$ ergeben sich, wenn man die Bitraten als ganzzahlige Vielfache dieses Normtaktes wählt. So kommt man z.B. bei einer Versiebzehnfachung auf eine Bitrate von 34,816 Mbit/s. Ob man diese oder die doppelte (69,632 Mbit/s) oder die vierfache (139,264 Mbit/s) Bitrate für die Breitbandsignale wählt, hängt davon ab, wie hoch man den Aufwand für die Redundanzverminderung und die damit verbundene Bandbreitenverminderung des Bildsignals treibt. In diese Betrachtung geht auch ein, für welche Bitrate sich die vielen Anschlußleitungen, sendeseitigen Multiplexer und teilnehmerseitigen Demultiplexer wirtschaftlich herstellen lassen.

In dem zuvor beschriebenen, den Anspruch 2 betreffenden Beispiel weisen die Breitbandsignale alle die gleiche Bitrate auf. Dies ist dann vorteilhaft, wenn nur gleichartige Dienste übertragen werden sollen. Demgegenüber weisen in dem System nach dem Patentanspruch 3 die Breitbandsignale unterschiedliche Bitraten auf, wobei die höheren Bitraten ganzzahlige Vielfache der geringsten Bitrate sind.

Dadurch wird erreicht:

— Wenn neben den Fernsehprogrammen Dienste mit geringerer Bandbreite, z.B. Tonrundfunkprogramme, übertragen werden sollen, so sieht man hierfür einen oder mehrere Breitbandkanäle mit geringerer Bitrate vor, wobei die geringere Bitrate an die geringere Bandbreite dieser Dienste angepaßt wird, wodurch die Bitrate des Multiplexsignals M nicht höher wird als notwendig.

— Wenn man für die jetzt üblichen Fernsehprogramme mit 625 Zellen pro Bild eine Bitrate von z.B. 34,816 Mbit/s festlegt, kann man leicht hochzeilige Fernsehprogramme mit entsprechend höherer Bildqualität einführen und dafür z.B. die doppelte Bitrate festlegen.

Ein entsprechendes Ausführungsbeispiel unterscheidet sich von dem zuvor beschriebenen durch die Bildung des Multiplexsignals, so daß die Figuren 1 bis 4 und der zugehörige Text sinngemäß auch hier gelten. Dieser Unterschied wird anhand der Figuren 7 bis 9 erläutert, wobei die Figur 7 das Bilden des Multiplexsignals M im zentralenseitigen Multiplexer betrifft. Im Gegensatz zur Figur 5 ist hier ebenfalls aus Gründen der einfacheren Darstellung angenommen, daß der Multiplexer nur die drei Eingänge $KS_1$ bis $KS_3$ aufweist, wobei die Eingänge $KS_1$ sowie $KS_2$ für die niedrige Bitrate und der Eingang $KS_3$ für die doppelte Bitrate bestimmt ist. Die Multiplexbildung geschieht auch wieder durch mehrere untereinander phasenverschobene Takte $TS_1$, $TS_2$, $TS_3$, $TS_3'$, wobei die Takte $TS_1$ und $TS_2$ den Eingängen $KS_1$, bzw. $KS_2$ zugeordnet sind. Dem Eingang $KS_3$ sind die beiden Takte $TS_3$ und $TS_3'$ zugeordnet, wobei ihre Phasenlage gegenüber dem Breitbandsignal so gewählt ist, daß jeder positive Taktimpuls ein anderes Bit dieses Breitbandsignals abtastet. Wie im Fall der Figur 5 müssen auch hier die Breitbandsignale bitflankensynchron sein; eine bestimmte Phasenlage ihrer signifikanten Bits zueinander wird auch hier nicht gefordert. Deshalb wurden hier die Kanalkennungsbits nicht eigens bezeichnet. Die Bezeichnung der einzelnen Bits gibt jetzt nur noch an, welchem der Eingänge $KS_1$ bis $KS_3$ sie zugeordnet sind und das wievielte Bit es in dem kurzen, hier betrachteten Ausschnitt des betr. Breitbandsignals ist.

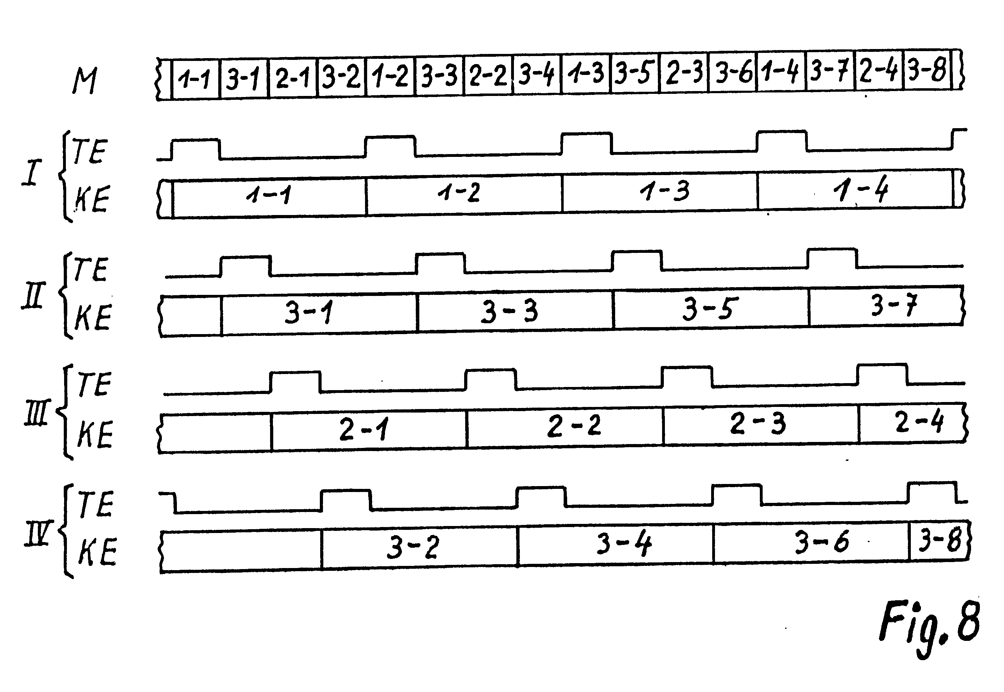

Anhand der Figur 8 wird das Wiedergewinnen eines Breitbandsignals mit der geringen Bitrate in einem dafür gestalteten teilnehmerseitigen Demultiplexer erklärt. Es gilt hier sinngemäß der Text zur Figur 6. Bei zwei der möglichen Phasenlagen des Empfangstaktes TE, nämlich bei der unter I und III angegebenen, wird jeweils eines der Breitbandsignale wiedergewonnen. Dagegen erscheinen bei den anderen zwei möglichen Phasenlagen unbrauchbare Teile des Breitbandsignals mit der hohen Bitrate.

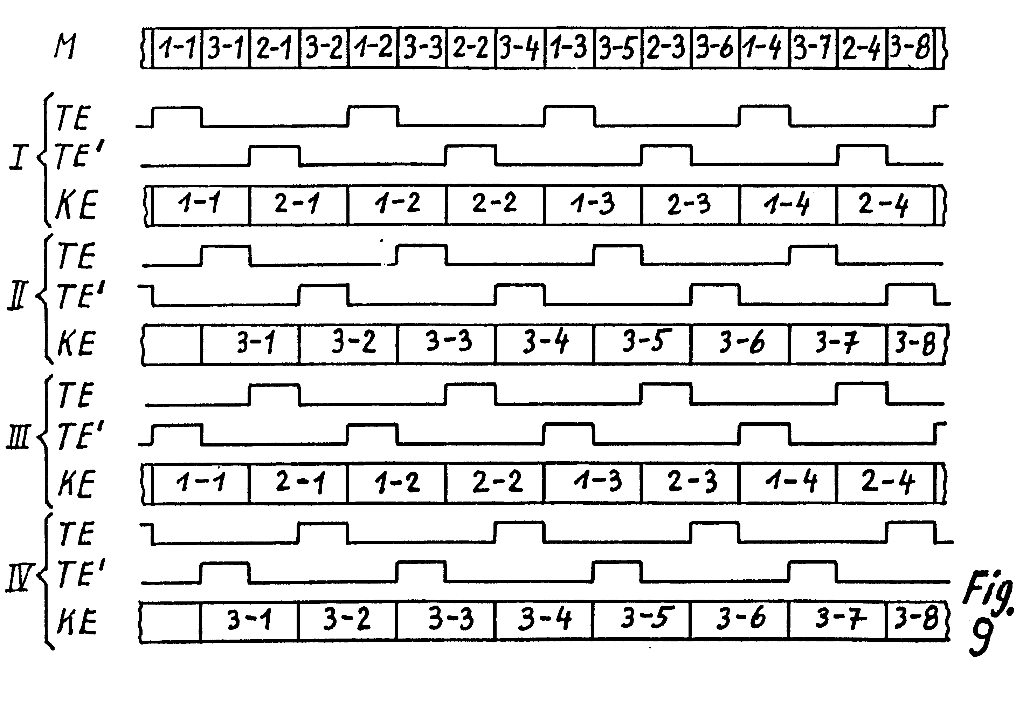

Anhand der Figur 9 wird das Wiedergewinnen des Breitbandsignals mit der hohen Bitrate beschrieben. Auch hier gilt sinngemäß der Text zur Figur 6; da aber zentralenseitig zwei Takte notwendig sind, müssen in dem für das Breitbandsignal hoher Bitrate bemessenen Demultiplexer zwei Empfangstakte TE und TE' mit der gleichen Phasenlage untereinander vorgesehen werden. Es kann aber auch ein einziger Takt mit der doppelten Frequenz, wie er sich aus der Überlagerung von TE und TE' ergibt, verwendet werden. Es ergeben sich wieder vier verschiedene mögliche Phasenlagen dieser zwei Empfangstakte TE und TE' gegenüber dem Multiplexsignal M; bei zweien, nämlich den unter II und IV angegebenen, wird das Breitbandsignal hoher Bitrate richtig wiedergewonnen, bei den beiden anderen Möglichkeiten erscheint eine unbrauchbare Bitfolge aus den Breitbandsignalen niedriger Bitrate.

Die Auswahl des gewünschten Breitbandsignals, wenn mehrere solcher mit hoher Bitrate vorgesehen sind auch bei diesen, geschieht wie bei dem ersten Ausführungsbeispiel, d.h. wie anhand der Figuren 3 und 4 beschrieben.

Durch die Beschränkung auf ganzzahlige Vielfache bei den Breitbandsignalen hoher Bitrate wird ein ähnlich einfacher Aufbau der Multiplexer und Demultiplexer ermöglicht wie bei den Systemen mit gleicher Bitrate aller Breitbandsignale. Man braucht nur die Bits des Multiplexsignals M im Verhältnis der Bitraten der Breitbandsignale diesen zuzuordnen, d.h., dem mit der niedrigsten Bitrate wird ein Bit, dem mit der doppelten Bitrate werden zwei Bits, dem mit der dreifachen Bitrate werden drei Bits aus einer Periode des Multiplexsignals zugeordnet.

In den zuvor beschriebenen Ausführungsbeispielen wird das Multiplexsignal M gemäß dem Patentanspruch 4 durch bitweise Verschachtelung gewonnen. Stattdessen ist aber gemäß dem Patentanspruch 5 auch eine wortweise Verschachtelung möglich.

Anhand der zuvor beschriebenen Ausführungsbeispiele lassen sich auch Systeme mit wortweiser Verschachtelung erläutern, man braucht nur in den in den Figuren 5 bis 9 gezeichneten Blöcken keine einzelnen Bits sondern aus mehreren Bits bestehende Datenwörter zu sehen.

Wortweise Verschachtelung hat gegenüber der bitweisen den Vorteil, daß im Demodulator DEM (Fig. 3) die Rahmenkennung schneller erkannt, die Kanalkennung schneller extrahiert und damit das gewünschte Fernsehprogramm schneller durchgeschaltet wird. Dagegen hat die bitweise Verschachtelung den Vorteil, daß sich im Multiplexer und Demultiplexer Bitströme mit hoher Bitrate leichter handhaben lassen.

**Patentansprüche**

1. Breitband-Verteil-Kommunikationssystem mit einigen Quellen ($Q_1...Q_k$, Fig. 1) für eine Anzahl Breitbandsignale ($P_1...P_m$) welche einer Zentrale zu-

geführt werden, wobei an die Zentrale viele Teilnehmer (T$_1$...T$_y$) angeschlossen sind, wobei sich in der Zentrale ein Multiplexer (Mux) befindet, an welchen die Breitbandsignale herangeführt sowie die Teilnehmer (T$_1$...T$_y$) angeschlossen sind, wobei die Breitbandsignale im Multiplexer zu einem Multiplexsignal zusammengefaßt werden, welches zu den Teilnehmern übertragen wird, wo daraus die Breitbandsignale wiedergewonnen werden und an Wiedergabegeräten wiedergegeben werden, dadurch gekennzeichnet, daß die Breitbandsignale in den Quellen (Q$_1$...Q$_k$) zu digitalen Breitbandsignalen mit gleicher Rahmenkennung und individueller Kanalkennung aufbereitet werden, daß mehrere Zentralen (Z$_1$...Z$_x$) vorgesehen sind, daß in den Multiplexern (Mux) ein digitales Multiplexsignal (M, Fig. 2 und 3) ohne das Hinzufügen einer Überrahmenkennung oder von Synchronisierzeichen gebildet wird, daß zum Wiedergewinnen der Breitbandsignale jedem Wiedergabegerät (E$_1$ bis E$_p$, Fig. 2) ein Demultiplexer (Demux$_1$ bis Demux$_p$) zugeordnet ist, welcher zum Wiedergewinnen eines einzigen Breitbandsignals mit Hilfe eines im Demultiplexer aus dem Multiplexsignal (M) gewonnenen Empfangstaktes (TE, Fig. 3 u.6) bemessen ist, daß ein Vergleicher (V, Fig. 3) vorgesehen ist, welcher die in dem jeweiligen wiedergewonnenen Breitbandsignal (KE, Fig. 3) enthaltene Kanalkennung (KK) mit der an einer Eingabetastatur (ET) eingegebenen Kennung des gewünschten Breitbandsignals vergleicht, daß der Vergleicher (V) mit dem zugehörigen Demultiplexer gekoppelt ist, damit bei Nichtübereinstimmung der beiden Kennungen der Empfangstakt (TE) in seiner Phasenlage soweit verändert wird bis Übereinstimmung erreicht ist.

2. Breitband-Verteil-Kommunikationssystem nach Anspruch 1, dadurch gekennzeichnet, daß die digitalen Breitbandsignale die gleiche Bitrate aufweisen.

3. Breitband-Verteil-Kommunikationssystem nach Anspruch 1, dadurch gekennzeichnet, daß die digitalen Breitbandsignale unterschiedliche Bitraten aufweisen, und daß die höheren Bitraten ganzzahlige Vielfache der niedrigsten Bitrate sind.

4. Breitband-Verteil-Kommunikationssystem nach Anspruch 1, 2 oder 3, dadurch gekennzeichnet, daß die Multiplexer (M, Fig. 2) für bitweise Verschachtelung ausgebildet sind.

5. Breitband-Verteil-Kommunikationssystem nach Anspruch 1, 2 oder 3, dadurch gekennzeichnet, daß die Multiplexer (M, Fig. 2) für wortweise Verschachtelung ausgebildet sind.

## Claims

1. Broadband distribution communications system with a number of sources (Q$_1$...Q$_k$, Fig. 1) for a number of broadband signals (P$_1$...P$_m$) which are provided to a central office where a plurality of subscribers (T$_1$...T$_y$) are connected to the central office and where a multiplexer (Mux) is located in the central office to which the broadband signals are routed and to which the subscribers (T$_1$...T$_y$) are connected and where the broadband signals are combined in the multiplexer into a multiplex signal which is transmitted to the subscribers and from which the broadband signals are retrieved and are reproduced in playback devices, characterized in that the broadband signals are processed in the sources (Q$_1$...Q$_k$) into digital broadband signals with the same frame identification and individual channel identification, in that a plurality of central offices (X$_1$...Z$_x$) are provided, in that a digital multiplex signal (M, Figs. 2 and 3) is formed in the multiplexers (Mux) without the addition of a frame group identification or of synchronizing signs, in that a demultiplexer (Demux$_1$ to Demux$_p$) is assigned to each playback device (E$_1$...E$_p$, Fig. 2) to retrieve the broadband signals by means of a receiving cycle (TE, Figs. 3 and 6) arrived at in the demultiplexer from the multiplex signal (M), in that a comparator (V, Fig. 3) is provided which compares the channel identification (KK) contained in the respective retrieved broadband signal (KE, Fig. 3) with the identification of the desired broadband signal entered in an input keyboard (ET), in that the comparator (V) is coupled with the associated demultiplexer so that, if the two identifications do not agree, the receiving cycle (TE) can be changed in its phase position until agreement is achieved.

2. Broadband distribution communications system in accordance with claim 1, characterized in that the digital broadband signals have the same bit rate.

3. Broadband distribution communications system in accordance with claim 1, characterized in that the digital broadband signals have different bit rates and in that the higher bit rates are whole number multiples of the lowest bit rates.

4. Broadband distribution communications system in accordance with claims 1, 2 or 3, characterized in that the multiplexers (M, Fig. 2) are designed for interlacing in the bit mode.

5. Broadband distribution communications system in accordance with claims 1, 2 or 3, characterized in that the multiplexers (M, Fig. 2) are designed for interlacing in the word mode.

## Revendications

1. Système de communication distribuée à large bande comportant quelques sources (Q$_1$...Q$_k$, figure 1) pour un certain nombre de signaux à large bande (P$_1$...P$_m$) qui sont amenés à une centrale, étant précisé qu'à la centrale sont reliés de nombreux usagers (T$_1$...T$_y$), étant précisé que dans la centrale se trouve un multiplexeur (Mux) auquel on amène les signaux à large bande et auquel sont reliés les usagers (T$_1$...T$_y$), étant précisé que les signaux à large bande sont regroupés dans le multiplexeur pour donner un signal multiplex qui est transmis aux usagers, où les signaux à large bande en sont récupérés et restitués dans les appareils de restitution, caractérisé en ce que les signaux à large bande sont soumis à un traitement préparatoire dans les sources (S$_1$...Q$_k$) pour donner des signaux numériques à large bande de même identificateur de cadre et de même identificateur de canal individuel; en ce que plusieurs centrales (Z$_1$...Z$_x$) sont prévues; en ce que dans les multiplexeurs (Mux) on forme un signal multiplex numérique (M, figure 2 et 3) sans y ajouter ni un identificateur de cadre d'ordre supérieur ni un caractère de synchronisation; en ce que, pour récupérer les signaux à large bande, on fait correspondre à chaque appareil de restitution ($E_1$ à $E_p$, figure 2) un démultiplexeur ($Demux_1$ à $Demux_p$) qui est conçu pour récupérer un unique signal à large bande à l'aide d'un signal d'horloge de réception (TE, figures 3 et 6) acquis dans le démultiplexeur à partir du signal multiplex (M); en ce qu'il est prévu un comparateur (V, figure 3) qui compare l'identificateur de canal (KK), contenu dans le signal à large bande chaque fois récupéré (KE, figure 3), avec l'identificateur, entré à un clavier d'entrée (ET) du signal à large bande désiré; en ce que le comparateur (V) est couplé avec le démultiplexeur correspondant pour qu'en cas de non-coïncidence des deux identificateurs, la position de phase du signal d'horloge de réception (TE) soit modifiée jusqu'à ce que l'on obtienne la coïncidence.

2. Système de communication distribuée à large bande selon la revendication 1, caractérisé en ce que les signaux numériques à large bande présentent le même débit binaire.

3. Système de communication distribuée à large bande selon la revendication 1, caractérisé en ce que les signaux numériques à large bande présentent des débits binaires différents et en ce que les débits binaires les plus élevés sont des multiples entiers des débits binaires les plus faibles.

4. Système de communication distribuée à large bande selon la revendication 1, 2 ou 3, caractérisé en ce que les multiplexeurs (M, figure 2) sont conçus pour une imbrication par bits.

5. Système de communication distribuée à large bande selon la revendication 1, 2 ou 3, caractérisé en ce que les multiplexeurs (M, figure 2) sont conçus pour une imbrication par mots.

Fig. 1

EP 0 212 261 B1

Fig. 2

Fig. 3

Fig. 4

Fig.5

EP 0 212 261 B1

EP 0 212 261 B1

M $\{|KK_1|B_{21}|B_{32}|KK_4|B_{11}|B_{22}|KK_3|B_{41}|B_{12}|KK_2|B_{31}|B_{42}|KK_1|B_{21}|B_{32}|KK_4|\}$

I
{ TE
{ KE $\{|$ $KK_1$ $|$ $B_{11}$ $|$ $B_{12}$ $|$ $KK_1$ $|\}$

II
{ TE
{ KE $\{|$ $B_{21}$ $|$ $B_{22}$ $|$ $KK_2$ $|$ $B_{21}$ $|\}$

III
{ TE
{ KE $\{|$ $B_{32}$ $|$ $KK_3$ $|$ $B_{31}$ $|$ $B_{32}$ $|\}$

IV
{ TE
{ KE $\{|$ $KK_4$ $|$ $B_{41}$ $|$ $B_{42}$ $|$ $KK_4$ $|\}$

Fig.6

Fig. 7

EP 0 212 261 B1

EP 0 212 261 B1

M {| 1-1 | 3-1 | 2-1 | 3-2 | 1-2 | 3-3 | 2-2 | 3-4 | 1-3 | 3-5 | 2-3 | 3-6 | 1-4 | 3-7 | 2-4 | 3-8 |}

I { TE

KE {| 1-1 | 1-2 | 1-3 | 1-4 |}

II { TE

KE {| | 3-1 | 3-3 | 3-5 | 3-7 |}

III { TE

KE {| | 2-1 | 2-2 | 2-3 | 2-4 |}

IV { TE

KE {| | 3-2 | 3-4 | 3-6 | 3-8 |}

*Fig. 8*

Fig. 9